(19)

**Europäisches Patentamt**
**European Patent Office**
**Office européen des brevets**

(11) **EP 3 373 196 A1**

(12) **EUROPEAN PATENT APPLICATION**

(43) Date of publication:
**12.09.2018 Bulletin 2018/37**

(51) Int Cl.:
***G06K 9/00*** *(2006.01)*

(21) Application number: **17465507.6**

(22) Date of filing: **07.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Continental Automotive GmbH 30165 Hannover (DE)**

(72) Inventor: **Stanciu, Ion Rares 307395 Sag (RO)**

(74) Representative: **Reuter, Andreas Conti Temic microelectronic GmbH Intellectual Property Sieboldstraße 19 90411 Nürnberg (DE)**

(54) **DEVICE FOR DETERMINING A REGION OF DIRT ON A VEHICLE WINDSCREEN**

(57) The present invention relates to a device (10) for determining a region of dirt on a vehicle windscreen. It is described to provide (210) a processing unit (30) with a plurality of images, the plurality of images relating to a scene external to a vehicle viewed through a windscreen of the vehicle. The processing unit determines (220) that a region of dirt exists on the windscreen, the determination comprising a calculation of at least one optic flow within the plurality of images. An output unit (40) outputs (230) output information representative of the region of dirt.

Fig. 1

**Description**

FIELD OF THE INVENTION

The present invention relates to a device for determining a region of dirt on a vehicle windscreen, to a system for determining a region of dirt on a vehicle windscreen, to a method for determining a region of dirt on a vehicle windscreen, as well as to a computer program element.

BACKGROUND OF THE INVENTION

The general background of this invention is the field of driving systems that determine if a windscreen of a vehicle is dirty.

US 3,947,131 relates to a device for indicating the soiling of a sheet of glass or windshield comprising a source of light that emits light through the windshield onto the soiled surface at the angle of total reflection, a photometer that registers the changes caused in the light returned through the glass as the result of the soiling of the windshield, and an indicating device or signal transmitter connected to the photometer.

US 6, 614, 015 B1 describes that a detector of stains on a transparent plate surface is arranged on an internal surface of the plate and includes an emitter for emitting a modulated light signal towards the inside of the plate and a receiver for receiving the signal after it has been reflected on an external surface of the plate. An optical unit made with a material having an index substantially higher than the plate, is arranged on the internal surface of the plate. The optical unit is made up of at least three faces returning the light signal and an interface with the internal surface of the plate through an optical coupler. A deflector deflects the signal from the emitter toward the plate and from the optical unit towards the receiver. At least two reflections on the external surface of the plate are produced through the optical coupler without reflection on the internal surface of the plate.

US8274562 describes a camera for identifying soiling on a protective screen. The camera is focused on a scene behind the protective screen and can be used to identify soiling and for other applications, e.g. to identify driving lanes and/or to identify objects. Soiling is identified by evaluating frames recorded in succession. It is described that a prerequisite for a successful measurement is that the relative speed of the camera and of at least one recorded object in the surroundings is not equal to zero and its trajectory is predicted in the depiction. By comparing the relevant frame sections, possible soiling on subregions of the protective screen is identified.

There is a need to provide a technique for determining dirt on a vehicle's windscreen that is not predicated on a speed of travel of the vehicle or on an active system that emits and collects radiation.

SUMMARY OF THE INVENTION

It would be advantageous to have improved apparatus for determining that a windscreen of a vehicle is dirty.

The object of the present invention is solved with the subject matter of the independent claims, wherein further embodiments are incorporated in the dependent claims. It should be noted that the following described aspects and examples of the invention apply also for the device for determining a region of dirt on a vehicle windscreen, the system for determining a region of dirt on a vehicle windscreen, the method for determining a region of on a vehicle windscreen, and for the computer program element.

In a first aspect, there is provided a device for determining a region of dirt on a vehicle windscreen, comprising:

- an input unit;
- a processing unit; and
- an output unit.

The input unit is configured to provide the processing unit with a plurality of images acquired at different times. The plurality of images relate to a scene external to a vehicle viewed through a windscreen of the vehicle. The processing unit is also configured to determine that a region of dirt exists on the windscreen. The determination comprises a calculation of at least one optic flow within the plurality of images. The output unit is configured to output information representative of the region of dirt.

In other words, dirt or soil on a windscreen can be detected on the basis of a calculation of optic flow in images acquired through a windscreen of a vehicle. Thus a normal in car camera, which is generally focused at infinity and not focused on the windscreen, can be utilised in order to detect dirty areas on a windscreen through a calculation of optic flow in acquired imagery, where images coming from the camera are being used. Here, optic flow can also be referred to as optical flow.

To put this another way, the device detects and signalizes dirt on a windscreen/windshield for a vehicle, that is located in a camera's field of view. Thus already existing vehicle cameras can be utilized, that are collecting imagery outside of the car, to detect dirt on a windscreens.

In this way, a notification can be given that the windscreen should be cleaned, which can include that the screen wash and windscreen wipers are activated and/or a message is provided to the driver of the vehicle that the windscreen should be cleaned. In an example, the same region of dirt can be determined in a plurality of images that extends over a threshold time limit, enabling a determination to be made that there is an area of dirt with an increased level of confidence because the area of dirt has remained in place over that threshold time period.

Additionally, optic flow within images changes different as a consequence of dirt on the windscreen in comparison to a crack in the windscreen that tends to scatter light rather than block it as happens with dirt, and as such a determination can be made that there is dirt on the windscreen rather than a crack in the windscreen.

In an example, the determination that a region of dirt exists on the windscreen comprises a calculation of at least one optic flow along at least one radial line generated from the plurality of images. Here a radial line can also be termed as a radial trajectory.

In other words, dirt on a windscreen is detected using optic flow in acquired imagery, based on optic flow measured along radial trajectories in the imagery. Optic flow can be calculated in a measuring window that moves along a radial line in imagery, and/or a whole series of measurement windows can be positioned along a radial line and the optic flow calculated within them.

In this way, because when a vehicle is in motion objects in imagery acquired by an onboard camera move along radial lines in the imagery, where optic flow is expected to increase along the radial lines, a region of dirt can be determined at a position on the windscreen where the optic flow along a radial line does not increase as expected.

In an example, the at least one radial line extends substantially from a vanishing point in the plurality of images.

In an example, the determination that a region of dirt exists on the windscreen comprises a calculation that the at least one optic flow is not piecewise continuous.

In other words, due to movement of the vehicle optic flow is expected to increase along radials in an expected manner, at a region along a radial where there is no such expected increase, in other words the increase is not piecewise continuous, a determination can be made that there is a region of dirt at the associated region of the windscreen.

In an example, the determination that a region of dirt exists on the windscreen comprises a calculation that the at least one optic flow is lower than at least one threshold value.

To put this another way, the optic flow along a radial in imagery actually falls at the position in the imagery corresponding to the position of dirt on the windscreen, and this drop in optic flow can be used to determine that there is dirt on the windscreen.

In an example, a threshold value for a radial line of the at least one radial line calculated at a first radial distance from the vanishing point is calculated based on an average optic flow, calculated as the average of the optic flow at a second radial distance from the vanishing point and the radial optic flow at a third radial distance from the vanishing point, wherein the first radial distance is between the second and third radial distances.

Thus, if the optic flow at a position is below an anticipated average threshold value, an indication can be made that a region of dirt exists on the windscreen. The threshold value can be the average value or can be below the average value to reduce false positive indications due to noise in the optic flow. In an example, an alpha filter can be used to filter out noise, where a calculated value is a weighted sum of a current value and an old value.

In an example, the determination that a region of dirt exists on the windscreen comprises a determination that a first position on the windscreen determined as a first region of dirt from a first optic flow along a first radial line of the at least one radial line correlates with a second position on the windscreen determined as a second region of dirt from a second optic flow along a second radial line of the at least one radial line.

In a second aspect, there is provided a system for determining a region of dirt on a vehicle windscreen, comprising:

- a camera; and
- a device for determining a region of dirt on a vehicle windscreen according to the first aspect.

The camera is configured to be located within a vehicle and the camera is configured to acquire the plurality of images relating to a scene external to the vehicle viewed through the windscreen of the vehicle.

In this manner, a camera based system is provided for a car, that can make use of existing cameras or use bespoke cameras that are looking at scenes outside of the car with the cameras focused on infinity, and the system enables the detection of dirt on the windscreen.

In a third aspect, there is provided a method for determining a region of dirt on a vehicle windscreen, comprising:

a) providing a processing unit with a plurality of images, the plurality of images relating to a scene external to a vehicle viewed through a windscreen of the vehicle;

b) determining with the processing unit that a region of dirt exists on the windscreen, the determination comprising a calculation of at least one optic flow within the plurality of images; and

c) outputting with an output unit output information representative of the region of dirt.

According to another aspect, there is provided a computer program element controlling apparatus as previously described which, in the computer program element is executed by processing unit, is adapted to perform the method steps as previously described.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

BRIEF DESCRIPTION OF THE DRAWINGS

Exemplary embodiments will be described in the following with reference to the following drawings:

Fig. 1 shows a schematic set up of an example of a device for determining a region of dirt on a vehicle windscreen;
Fig. 2 shows a schematic set up of an example of a system for determining a region of dirt on a vehicle windscreen;
Fig. 3 shows a method for determining a region of dirt on a vehicle windscreen;
Fig. 4 shows a schematic representation of the crown of a tree in captured imagery;
Fig. 5 shows a schematic representation of the crown of a tree in captured imagery with dirt on a windscreen blocking part of the image view;
Fig.6 shows a schematic representation of optic flow calculated along a radial trajectory line for the situation represented in Fig. 4;
Fig.7 shows a schematic representation of optic flow calculated along a radial trajectory line for the situation represented in Fig. 5; and
Fig. 8 shows a schematic representation of optic flow calculated along a radial trajectory line for the situation represented in Fig. 5, where optic flow values are used to generate a threshold value.

DETAILED DESCRIPTION OF EMBODIMENTS

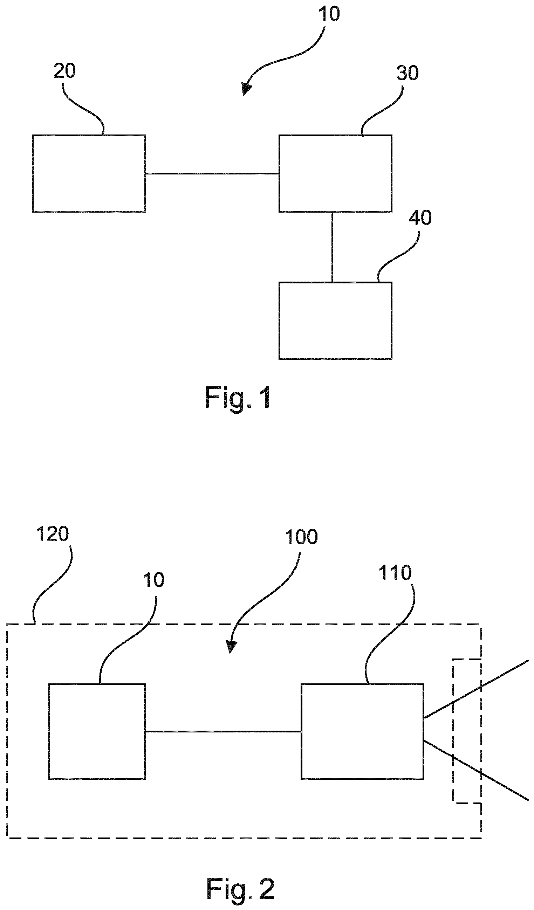

Fig. 1 shows an example of a device 10 for determining a region of dirt on a vehicle windscreen. The device 10 comprises an input unit 20, a processing unit 30, and an output unit 40. The input unit 20 is configured to provide the processing unit 30 with a plurality of images acquired at different times. The plurality of images relate to a scene external to a vehicle viewed through a windscreen of the vehicle. The processing unit 30 is also configured to determine that a region of dirt exists on the windscreen. The determination comprises a calculation of at least one optic flow within the plurality of images. The output unit 40 is configured to output information representative of the region of dirt.

In an example, the plurality of images was acquired by a camera that was not focused on the windscreen of the vehicle.

The device operates on imagery acquired by only one camera, and as such does not rely on imagery provided by a stereovision system. However, the device can operate on imagery provided by a stereovision system, where imagery coming from each camera is separately processed to determine optic flow in the respective imagery. Thus the device and method can be applied in a stereo vision system to detect dirt or soil, where the optic flow is computed on images coming from the each camera separately. This is in order to have correspondence for measuring windows.

Thus in this manner, standard vehicle cameras that are viewing scenes external to the vehicle as part of navigation and/or safety systems, or as part of automatic driving systems can also be utilised to determine if a vehicle's windscreen has an region of dirt on it.

In an example, the output unit is in effect an output of the processing unit. In other words, it can be an output of an algorithm running on the processing unit, and is useable by other system to act of the information relating to the region of dirt on the windscreen. In an example, the output unit is a separate unit to the processing unit, and on the basis processing undertaken by the processing unit outputs information relating to the dirt on the windscreen. In an example, the output unit is a visual display unit (VDU) that indicates to a driver that there is dirt on a windscreen. In an example, the output unit is a control unit that sends an output to a windscreen wiper system to activate the windscreen wiper. In an example, the output unit is a control unit that sends an output to a washer system that sprays screen wash on the windscreen. In an example, the output unit is a systems unit that provides information to other systems, such as other ADAS systems that are running in the car and that are processing imagery, to indicate to those systems that there is dirt on the windscreen at a particular position, in order that those other systems can process the acquired imagery appropriately, including taking into account that there is dirt at that region of the windscreen. In an example, the output unit is all of these described output units.

According to an example, the determination that a region of dirt exists on the windscreen comprises a calculation of at least one optic flow along at least one radial line generated from the plurality of images.

In an example, the optic flow decreases in the imagery at the associated position of dirt on the windscreen along a radial that extends through the position of dirt.

In an example, at least one measuring window is located along each of the at least one radial line and the optic flow within this measuring window is calculated.

According to an example, the at least one radial line extends substantially from a vanishing point in the plurality of images.

According to an example, the determination that a region of dirt exists on the windscreen comprises a calculation that the at least one optic flow is not piecewise continuous.

According to an example, the determination that a region of dirt exists on the windscreen comprises a calculation that the at least one optic flow is lower than at least one threshold value.

According to an example, a threshold value for a radial line of the at least one radial line calculated at a first radial distance from the vanishing point is calculated based on an average optic flow. The threshold is calculated as the average of the optic flow at a second radial distance from the vanishing point and the optic flow at a third radial distance from the vanishing point. The first radial distance is between the second and third radial distances.

In an example, an image has a vanishing point and the image has a border. A radial line (or trajectory) can extend from the vanishing point to a whole a point on the border. Similarly, other radial lines can extend from the vanishing point to other points on the border. The optical flow at the end of a radial line at the vanishing point is low, and can be zero. The optical flow at the end of the radial line at the border is higher, and in an example can linearly increase from the vanishing point to the border. Therefore, dirt can be detected by monitoring the optical flow in a window that moves along a radial line from the vanishing point to the image border.

In an example, the determination that region of dirt exists on the windscreen comprises the monitoring of optic flow in a window that moves along a radial line from the vanishing point to the image border.

In examples, a whole series of pairs of optic flow values along a radial line can be used to determine if a region of dirt exits that can be spaced apart from each other by various distances along the radial, because it will only be at the region of the dirt that the optic flow falls below the threshold value.

According to an example, the determination that a region of dirt exists on the windscreen comprises a determination that a first position on the windscreen determined as a first region of dirt from a first optic flow along a first radial line of the at least one radial line correlates with a second position on the windscreen determined as a second region of dirt from a second optic flow along a second radial line of the at least one radial line.

In an example, the determination that a region of dirt exists within the windscreen comprises a determination that the first position is adjacent to the second position.

Fig. 2 shows an example of a system 100 for determining a region of dirt on a vehicle windscreen. The system 100 comprises a camera 110, and a device 10 for determining a region of dirt on a vehicle windscreen as described with reference to Fig. 1. The camera 110 is configured to be located within a vehicle 120. The camera 110 is also configured to acquire the plurality of images relating to a scene external to the vehicle viewed through the windscreen 130 of the vehicle 120.

In an example, the camera 110 is the input unit 20. In an example, the device 10 is located within the vehicle.

In this way, the optic flow depends upon the velocity of the vehicle and the distance between the camera and objects being viewed in the scene, such as for example cars parked on the side of the road.

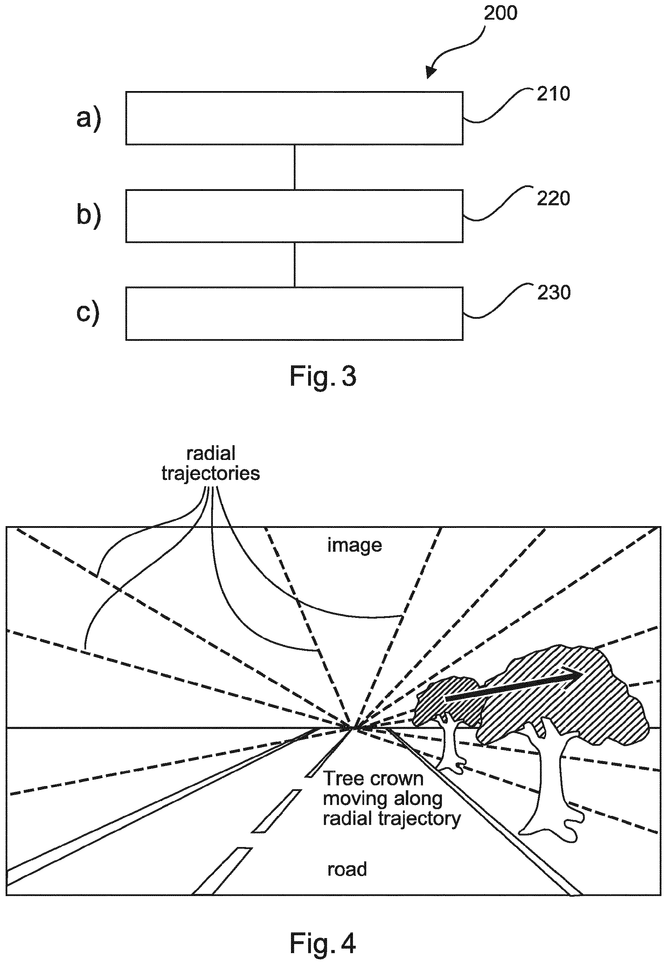

Fig. 3 shows a method 200 for determining a region of dirt on a vehicle windscreen in its basic steps. The method comprises:

in a providing step 210, also referred to as step a), providing a processing unit 30 with a plurality of images, the plurality of images relating to a scene external to a vehicle viewed through a windscreen of the vehicle;

in a determining step 220, also referred to as step b), determining with the processing unit that a region of dirt exists on the windscreen, the determination comprising a calculation of at least one optic flow within the plurality of images; and

in an outputting step 230, also referred to as step c), outputting with an output unit 40 output information representative of the region of dirt.

In an example, step b) comprises a calculation of at least one optic flow along at least one radial line generated from the plurality of images.

In an example, the at least one radial line extends substantially from a vanishing point in the plurality of images.

In an example, step b) comprises a calculation that the at least one optic flow is not piecewise continuous.

In an example, step b) comprises a calculation that the at least one optic flow is lower than at least one threshold value.

In an example, step b) comprises calculating a threshold value as an average optic flow for a radial line of the at least one radial line calculated at a first radial distance from the vanishing point, calculated as the average of the optic flow at a second radial distance from the vanishing point and the optic flow at a third radial distance from the vanishing point, wherein the first radial distance is between the second and third radial distances.

In an example, step b) comprises a determination that a first position on the windscreen determined as a first region of dirt from a first optic flow along a first radial line of the at least one radial line correlates with a second position on the windscreen determined as a second region of dirt from a second optic flow along a second radial line of the at least one radial line.

In an example, step b comprises calculating the optic flow in a window that moves along a radial line from the vanishing point to the image border.

The device, system and method are now described in further detail with respect to Figs. 4-8.

Fig. 4 shows a schematic representation of imagery acquired by a forward-looking camera in a vehicle. In this typical situation, as the vehicle was progressing along the road a tree moves in acquired imagery, with the tree crown shown into positions for simplicity where actually the tree crown will be in a whole series of consecutive images. Objects in the acquired imagery will move along radial projections extending from a vanishing point in the imagery as shown in Fig. 4.

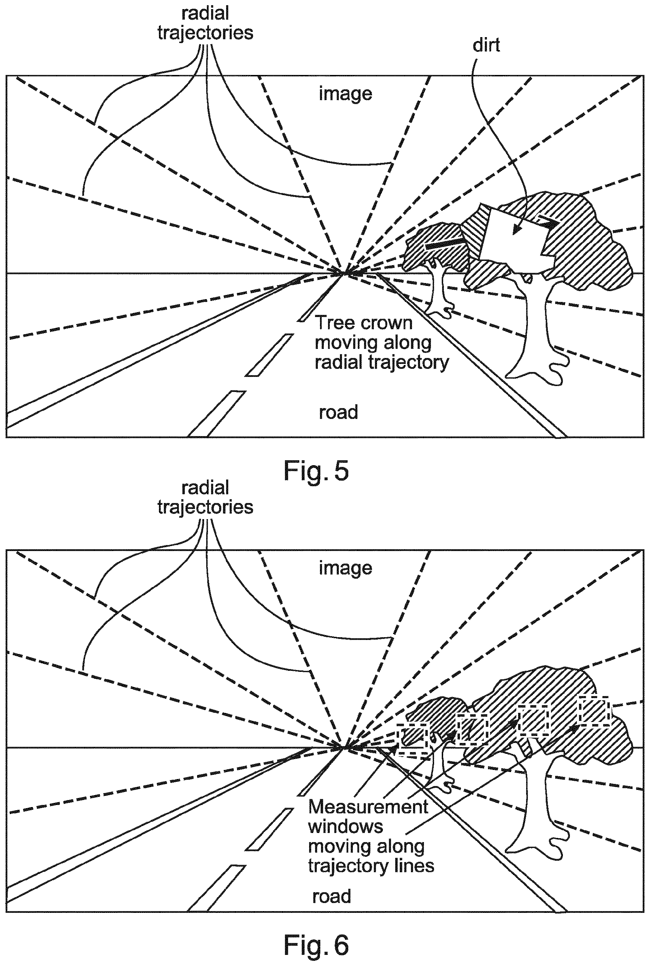

Fig. 5 shows the same situation as represented in Fig. 4, but now dirt on the windscreen (also called a windshield) at a particular position on the windscreen blocks the view over a certain part of the field of view. Therefore objects that progress along a number of radial projections were passed through the region associated with the position of the dirt on the windscreen. This is shown in Fig. 5 for the second image of the tree crown.

Fig. 6 shows a schematic representation of optic flow calculated at different positions along the radial projection line for the situation as represented in Fig. 4. As the vehicle moves along the road and moves closer to the tree, the optic flow computed along radial trajectories that extend from the vanishing point, in the associated acquired imagery, slowly increases. The increase in optic flow depends once factors such as the vehicle's velocity and acceleration. As schematically represented in Fig. 6 optic flow calculated at a number of window positions along a radial trajectory will therefore increase.

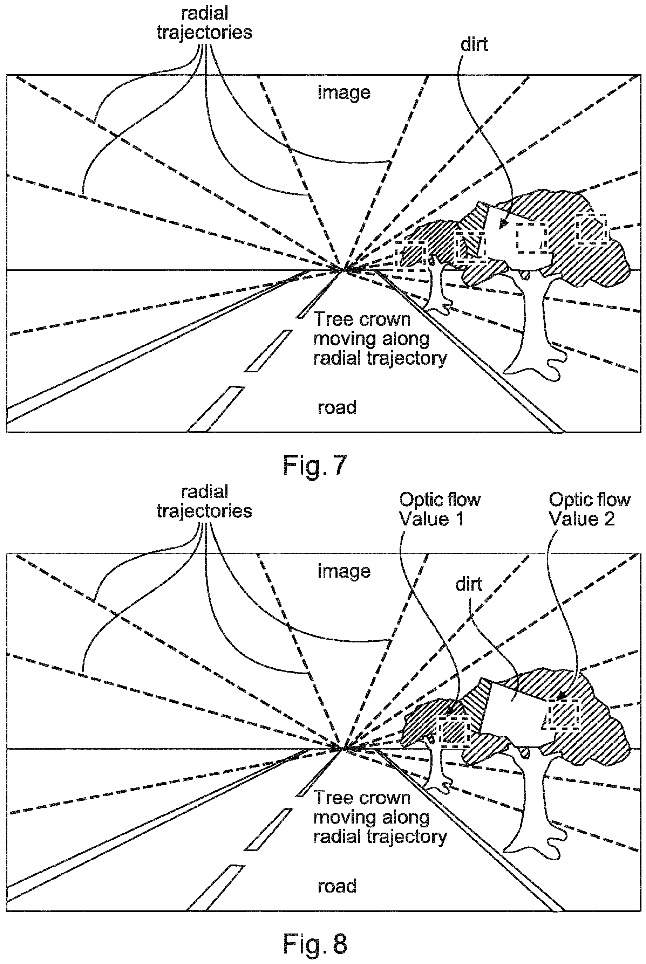

However, for the situation shown in Fig. 7 one of the windows positions in the acquired imagery where optic flow is calculated is at the position that corresponds with a position of dirt on the windscreen. In this case, the optic flow at this window position drops and if the entire measurement window is occluded the optic flow can drop to zero. Therefore, in the situation there is dirt on the windscreen the optic flow will suddenly drop in the dirty area along a radial trajectory, because there is no camera-dirt relative motion. To explain further, because the vehicle is in motion objects around it move on radial lines starting from the vanishing point located in the field of view of a camera. However, if the patch is located on one such radial line, the optic flow drops in the region affected by the dirt. The optic flow drop occurs and every radial line or trajectory that overlays or extends through the imagery that corresponds with the position of the dirt on the windscreen. This fall in optic flow can be used to detect the presence of dirt and its location on the windscreen, and because the change in optic flow is different to that for the case where the windscreen is a crack at differentiation can be made between dirt and a crack. An appropriate signal can then either be provided to the driver that there is dirt on the windscreen, or the screen washer and windscreen wipers can be automatically activated to clean the windscreen.

As shown in Fig. 8, the optic flow at two lateral window positions along the radial trajectory can be calculated and used to determine a threshold value based on the average value of these 2 optic flow values. Therefore, as discussed above because the optic flow is expected to increase the longer radial trajectory, but falls (or does not increase as expected) at the position imagery corresponding to dirt on the windscreen, a comparison of the optic flow at this position with the threshold value enables the dirt to be signalized. As such, this threshold can determine the measurement window in which the optic flow drops (or does not increase is expected) and if this drop in optic flow at that position is persistent in time, an indication can be made that there is dirt on the windscreen.

In the above example, the threshold value is calculated based on an average value between 2 window positions. Threshold value can be lower than this average to account for noise in optic flow and indeed the threshold value need not be calculated based on an average value, but could for example be calculated based on a global curve fitting to the optic flow values along the radial trajectory. The skilled person will also appreciate other ways of calculating the threshold value.

Windscreen dirt detection with Optic Flow

Further detail regarding how optic flow in captured imagery is used to detect dirt on a windscreen is now discussed.

The OF concept detects that the windshield has a region of dirt based on the discontinuities the regions of dirt generate when they interpose themselves between objects in the scene being viewed and the car's camera. Assuming a straight road and a car moving with constant velocity, the pixels representing the car running 100m ahead are not moving. However, pixels located off center representing (the roadside vegetation and objects) move and their speed increases as the distance between them and the camera decreases. In the present situation, within the "in vehicle-camera application", the roadside objects move from the vanishing point towards the margins of the image following a so-called "trajectory". As explain above, assuming a constant speed, the Optic Flow generated by such objects along the trajectories is expected to increase due to the camera-object distance decrease. Depending on the dirt (its dimensions relative to the measuring windows used to compute the Optic Flow - as shown in Fig. 7) and its opacity, one can observe:

- an OF value increase lower than expected,
- an OF value that does not increase at all (the value is the same as for the previous measuring window - there is going to be a significant increase of the OF value in the measuring window located right after the drop),
- a drop of the OF value.

The above scenario can be used to detect the windscreen (windshield) dirt. The Optic Flow increases along trajectory lines (see for example Fig. 6) in the case of a clean windshield, and this increase depends on the vehicles's velocity (even when the car moves at constant speed). It also depends on its motion regime (acceleration and braking). A mechanism detecting the above-mentioned scenario (depending on the desired sensitivity) repetitively is able to detect and signalize the windshield dirt. The Optic Flow value depends on the distance between the vehicle (the camera) and the object and depends on the vehicle's velocity.

In deriving a method to compute the Optic Flow, the brightness of the image point with coordinates (x, y) is denoted by E (x, y, t). According to Sonka et al (Sonka, Hlavac, & Boyle, 1999) the Optic Flow computation is based on two assumptions:

- the observed brightness of any object point is constant over time,
- the points closed to one another move in similar manner (the velocity profile is smooth).

Assuming noiseless data, the brightness E(x,y,t) varies in the image space (x, y) and in time (due to the motion). As such, one can decompose it in a Taylor series (equation 1).

$$E(x+dx, y+dy, t+dt) = E(x,y,t) + \frac{\partial E}{\partial x} \cdot dx + \frac{\partial E}{\partial y} \cdot dy + \frac{\partial E}{\partial t} \cdot dt + HOT$$

$$(1)$$

In equation 1, the term denoted by HOT ("higher order terms") contains the terms of higher order. The neighborhood of the (i, j) point is translated by (dx,dy) during the dt time interval. As such one can write equation 2 as:

$$E(x+dx, y+dy, t+dt) = E(x,y,t)$$

$$(2)$$

If dx, dy and dt quantities are kept very small, the "HOT" term in equation 1 can be neglected. By combining equations 1 and 2 one ends up with equation 3 (where the left hand side term comes from equation 1 and represents E (x+dx, y+dy, t+dt) and the right hand side term comes from equation 2.

$$E(x,y,t) + \frac{\partial E}{\partial x} \cdot dx + \frac{\partial E}{\partial y} \cdot dy + \frac{\partial E}{\partial t} \cdot dt = E(x,y,t)$$

$$3)$$

In order to simplify writing the brightness partial derivatives are denoted as equation 4 shows.

$$E_x = \frac{\partial E}{\partial x}$$

$$E_y = \frac{\partial E}{\partial y}$$

$$E_t = \frac{\partial E}{\partial t}$$

$$4)$$

With these notations, equation 3 transforms into the partial derivatives condition expressed by equation 5.

$$E_t \cdot dt = -E_x \cdot dx - E_y \cdot dy$$

$$(5)$$

If dividing both terms with dt one ends up with equation 6.

$$E_t = -E_x \cdot \frac{dx}{dt} - E_y \cdot \frac{dy}{dt} = -E_x \cdot u - E_y \cdot v$$

$$(6)$$

In equation 6 the values for u and v are given by equations 7.

$$u = \frac{dx}{dt}$$

$$v = \frac{dy}{dt}$$

$$7)$$

The goal is to compute the two components of the velocity:

$$\overline{c} = \left( \frac{dx}{dt}, \frac{dy}{dt} \right) = (u, v)$$

$$(7)$$

Equation 6 does not solve the problem completely. As such, the smoothness constraint is introduced. This is equivalent to the fact that the velocity vector changes slowly in a neighborhood. As such, the Optic Flow difference between any such pixels and the average over the neighborhood is limited. Horn and Schunk (Horn & Schmunk, 1981) minimize the sum of the squared error. These are defined in equation 8.

$$Err^2(x, y) = \left( E_x \cdot u + E_y \cdot v + E_t \right)^2 + \lambda \cdot \left( u_x^2 + u_y^2 + v_x^2 + v_y^2 \right)$$

$$8)$$

The term $\lambda$ is a Lagrange parameter. Horn and Schunk (Horn & Schmunk, 1981) reduce to solving the equations 9.

$$\left( \lambda^2 + E_x^2 \right) \cdot u + E_x \cdot E_y \cdot v = \lambda^2 \cdot \overline{u} - E_x \cdot E_t$$

$$\left( \lambda^2 + E_y^2 \right) \cdot v + E_x \cdot E_y \cdot u = \lambda^2 \cdot \overline{v} - E_y \cdot E_t$$

$$9)$$

In equation 9, $\bar{u}$ and $\bar{v}$ are the mean values of velocity in x and y directions. It can be demonstrated that a solution to these equations are given by 10.

$$u = \bar{u} - E_x \cdot \frac{E_x \cdot \bar{u} + E_y \cdot \bar{v}}{\lambda^2 + E_x^2 + E_y^2}$$

$$v = \bar{v} - E_y \cdot \frac{E_x \cdot \bar{u} + E_y \cdot \bar{v}}{\lambda^2 + E_x^2 + E_y^2}$$

10)

Further details on Optic Flow calculations can be found in the following publications: Green, W. E., Oh, P. Y., Sevcik, K., & Barrows, G. (2003). Autonomous Landing for Indoor Flying Robots Using Optic Flow. Proceedings of ASME International Mechanical Engineering Congress and Systems, (pp. 1347-1352). Washington DC; Horn, B. H., & Schmunk, B. J. (1981). Determining Optical Flow. Artificial Intelligence , Vol. 17, 185-204; Jain, R., Martin, W. N., & Aggarwal, J. K. (1979). Segmentation Through the Detection of Changes Due to Motion. Computer Graphycs and Image Processing, 11.1, pp. 13-34; Jain, R., Militzer, D., & Nagel, H. H. (1977). Separating Non-stationary from Stationary Scene Components in a sequence of Real World TV-images. Proceedings of the 5th Internationl Joint Conference on Artificial Intelligence, (pp. 612-618); Limb, J. O., & Murphy, J. A. (1975). Estimating the Velocity of Moving Images in Television Signals. Computer Graphics and Image Processing, 4.4, pp. 311-327; Nakayama, K., & Loomis, J. M. (1974). Optical Flow Velocity Patterns, Velocity-Sensitive Neurons and Space Perception. Perception , 3, 63-80; and Sonka, M., Hlavac, V., & Boyle, R. (1999). Image Processing, Analysis, and Machine Vision (2nd Edition ed.). PWS Publishing, ITP An International Thomson Publishing Company.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. A device (10) for determining a region of dirt on a vehicle windscreen, comprising:

- an input unit (20);
- a processing unit (30); and
- an output unit (40);

wherein, the input unit is configured to provide the processing unit with a plurality of images acquired at different times, the plurality of images relating to a scene external to a vehicle viewed through a windscreen of the vehicle; wherein, the processing unit is configured to determine that a region of dirt exists on the windscreen, the determination comprising a calculation of at least one optic flow within the plurality of images; and wherein, the output unit is configured to output information representative of the region of dirt.

2. Device according to claim 1, wherein the determination that a region of dirt exists on the windscreen comprises a calculation of at least one optic flow along at least one radial line generated from the plurality of images.

3. Device according to claim 2, wherein the at least one radial extends substantially from a vanishing point in the plurality of images.

4. Device according to any of claims 2-3, wherein the determination that a region of dirt exists on the windscreen comprises a calculation that the at least one optic flow is not piecewise continuous.

5. Device according to any of claims 2-4, wherein the determination that a region of dirt exists on the windscreen comprises a calculation that the at least one optic flow is lower than at least one threshold value.

6. Device according to claim 5, wherein a threshold value for a radial line of the at least one radial line calculated at a first radial distance from the vanishing point is calculated based on an average optic flow, calculated as the average of the optic flow at a second radial distance from the vanishing point and the optic flow at a third radial distance from the vanishing point, wherein the first radial distance is between the second and third radial distances.

7. Device according to any of claims 2-6, wherein the determination that a region of dirt exists on the windscreen comprises a determination that a first position on the windscreen determined as a first region of dirt from a first optic flow along a first radial line of the at least one radial line correlates with a second position on the windscreen determined as a second region of dirt from a second optic flow along a second radial line of the at least one radial line.

8. A system (100) for determining a region of dirt on a vehicle windscreen, comprising:

- a camera (110);
- a device (10) for determining a region of dirt on a vehicle windscreen according to any of claims 1-9;

wherein, the camera is configured to be located within a vehicle (120) and the camera is configured to acquire the plurality of images relating to a scene external to the vehicle viewed through the windscreen (130) of the vehicle.

9. A method (200) for determining a region of dirt on a vehicle windscreen, comprising:

a) providing (210) a processing unit (30) with a plurality of images, the plurality of images relating to a scene external to a vehicle viewed through a windscreen of the vehicle;
b) determining (220) with the processing unit that a region of dirt exists on the windscreen, the determination comprising a calculation of at least one optic flow within the plurality of images; and
c) outputting (230) with an output unit (40) output information representative of the region of dirt.

10. A computer program element for controlling an apparatus according to any one of claims 1 to 7 and/or a system according to claim 8, which when executed by a processor is configured to carry out the method of claim 9.

10

20 30

40

**Fig. 1**

120 100

10 110

**Fig. 2**

200

a) 210

b) 220

c) 230

Fig. 3

radial
trajectories

image

Tree crown
moving along
radial trajectory

road

Fig. 4

radial
trajectories

image

dirt

Tree crown
moving along
radial trajectory

road

Fig. 5

radial
trajectories

image

Measurement
windows
moving along
trajectory lines

road

Fig. 6

Fig. 7

Fig. 8

Europäisches
Patentamt

European
Patent Office

Office européen
des brevets

# EUROPEAN SEARCH REPORT

Application Number

EP 17 46 5507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EINECKE NILS ET AL: "Detection of camera artifacts from camera images", 17TH INTERNATIONAL IEEE CONFERENCE ON INTELLIGENT TRANSPORTATION SYSTEMS (ITSC), IEEE, 8 October 2014 (2014-10-08), pages 603-610, XP032685719, DOI: 10.1109/ITSC.2014.6957756 [retrieved on 2014-11-14] | 1,8-10 | INV. G06K9/00 |
| A | * III. Artifact detection; page 604 - page 606 * | 2-7 | |
| X | YOU SHAODI ET AL: "Adherent Raindrop Modeling, Detectionand Removal in Video", IEEE TRANSACTIONS ON PATTERN ANALYSIS AND MACHINE INTELLIGENCE, IEEE COMPUTER SOCIETY, USA, vol. 38, no. 9, 1 September 2016 (2016-09-01), pages 1721-1733, XP011618206, ISSN: 0162-8828, DOI: 10.1109/TPAMI.2015.2491937 [retrieved on 2016-08-03] | 1,8-10 | |
| A | * 1. Introduction; page 1721 * * 3.4 Detecting Raindrops Using Optic Flow; page 1724 * * 5.1 Feature Extraction; page 1725 - page 1726 * | 2-7 | TECHNICAL FIELDS SEARCHED (IPC) G06K |

-/--

The present search report has been drawn up for all claims

| Place of search | Date of completion of the search | Examiner |
|---|---|---|
| The Hague | 1 August 2017 | Isa, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 46 5507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN LI ET AL: "Dust particle detection in traffic surveillance video using motion singularity analysis", DIGITAL SIGNAL PROCESSING, ACADEMIC PRESS, ORLANDO,FL, US, vol. 58, 1 August 2016 (2016-08-01), pages 127-133, XP029727491, ISSN: 1051-2004, DOI: 10.1016/J.DSP.2016.07.020 * the whole document * | 1-10 | |
| X | EP 2 899 692 A1 (HONDA RES INST EUROPE GMBH [DE]) 29 July 2015 (2015-07-29) | 1,8-10 | |
| A | * abstract; claims; figures * | 2-7 | |

TECHNICAL FIELDS
SEARCHED        (IPC)

The present search report has been drawn up for all claims

| Place of search | Date of completion of the search | Examiner |
|---|---|---|
| The Hague | 1 August 2017 | Isa, Sabine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 46 5507

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2017

| Patent document cited in search report | | Publication date | Patent family member(s) | Publication date |
|---|---|---|---|---|
| EP 2899692 | A1 | 29-07-2015 | EP 2899692 A1 | 29-07-2015 |
| | | | JP 6018231 B2 | 02-11-2016 |
| | | | JP 2015156212 A | 27-08-2015 |
| | | | US 2015213318 A1 | 30-07-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3947131 A
- US 6614015 B1
- US 8274562 B

**Non-patent literature cited in the description**

- **GREEN, W. E. ; OH, P. Y. ; SEVCIK, K. ; BARROWS, G.** Autonomous Landing for Indoor Flying Robots Using Optic Flow. *Proceedings of ASME International Mechanical Engineering Congress and Systems,* 2003, 1347-1352
- **HORN, B. H. ; SCHMUNK, B. J.** Determining Optical Flow. *Artificial Intelligence,* 1981, vol. 17, 185-204
- **JAIN, R. ; MARTIN, W. N. ; AGGARWAL, J. K.** Segmentation Through the Detection of Changes Due to Motion. *Computer Graphycs and Image Processing,* 1979, vol. 11.1, 13-34
- **JAIN, R. ; MILITZER, D. ; NAGEL, H. H.** Separating Non-stationary from Stationary Scene Components in a sequence of Real World TV-images. *Proceedings of the 5th Internationl Joint Conference on Artificial Intelligence,* 1977, 612-618
- **LIMB, J. O. ; MURPHY, J. A.** Estimating the Velocity of Moving Images in Television Signals. *Computer Graphics and Image Processing,* 1975, vol. 4.4, 311-327
- **NAKAYAMA, K. ; LOOMIS, J. M.** Optical Flow Velocity Patterns. *Velocity-Sensitive Neurons and Space Perception,* 1974, vol. 3, 63-80
- **SONKA, M. ; HLAVAC, V. ; BOYLE, R.** Image Processing, Analysis, and Machine Vision. ITP An International Thomson Publishing Company, 1999